# EUROPÄISCHE PATENTSCHRIFT

(11) **EP 2 149 421 B1**
(45) Veröffentlichungstag und Bekanntmachung des Hinweises auf die Patenterteilung: **30.11.2011**
(21) Anmeldenummer: 08104923.1
(22) Anmeldetag: 30.07.2008
(51) Int. Cl.: B23K 26/22, B23K 26/42, B23K 26/08, B23K 26/14

(54) **Laser-Schweißwerkzeug mit einem Faserlaser**
Laser welding tool with a fibre laser
Outil de soudage laser avec un laser fibre

(43) Veröffentlichungstag der Anmeldung: 03.02.2010
(73) Patentinhaber: IPG Photonics Corporation, Oxford, Massachusetts 01540 (US)
(72) Erfinder: Heinz, Heribert, 57537 Wissen (DE); Kessler, Berthold, 35753 Arborn (DE)
(74) Vertreter: Kohlmann, Kai

(56) Entgegenhaltungen:
- JP-A- 6 015 471
- JP-A- 7 032 177
- JP-A- 58 053 384
- JP-A- 2004 306 057
- US-A1- 2003 213 786
- US-A1- 2007 119 829

## Beschreibung

Die Erfindung betrifft ein Laser-Schweißwerkzeug zur Erzeugung einer Schweißnaht zum Verbinden von Werkstücken gemäß dem Oberbegriff des Anspruchs 1 (siehe, z.B., JP 58/053384).

In der Automobilindustrie sowie der Zulieferindustrie wird nach wie vor überwiegend das Widerstandsschweißen, im Karosseriebau zumeist mit Hilfe Roboter geführter Schweißzangen durchgeführt. Das Widerstandsschweißen ist ein Schweißverfahren für elektrisch leitfähige Werkstoffe auf Basis der Jouleschen-Stromwärme eines durch die Verbindungsstelle fließenden elektrischen Stroms. Durch die Stromwärme werden die zu verbindenden Werkstücke bis zum Aufschmelzen erhitzt. Durch das Wiedererstarren der Schmelze entsteht eine Schweißverbindung. Die miteinander zu verbindenden Werkstücke werden üblicherweise durch Schweißzangen während und nach dem Stromfluss zusammengedrückt, wodurch die Bildung einer innigen Verbindung unterstützt wird.

Daneben gewinnt jedoch das Laserstrahlschweißen zunehmend an Bedeutung. Laserstrahlschweißen wird vor allem zum Verschweißen von Werkstücken eingesetzt, die mit hoher Schweißgeschwindigkeit, schmaler und schlanker Schweißnaht und mit geringem thermischem Verzug gefügt werden müssen. Das Laserstrahlschweißen oder auch Laserschweißen genannt, wird, wie das Widerstandsschweißen, in der Regel ohne Zuführung eines Zusatzwerkstoffes ausgeführt.

Die Laserstrahlung wird mittels eines Kollimators fokussiert. Die Werkstückoberfläche der Stoßkante bzw. der Fügestoß der zu verschweißenden Werkstücke befindet sich in der unmittelbaren Nähe des Fokus des Kollimators, der beim Laserstrahlschweißen auch als Brennfleck bezeichnet wird. Der Brennfleck besitzt typische Durchmesser von 0,5 bis 1,0 mm, wodurch sehr hohe Energiekonzentrationen entstehen. Durch Absorption der Laserleistung erfolgt auf der Werkstückoberfläche ein extrem schneller Anstieg der Temperatur über die Schmelztemperatur des Metalls hinaus, so dass sich eine Schmelze bildet. Den Vorteilen des Laserschweißens stehen jedoch hohe Anschaffungskosten, ein schlechter Wirkungsgrad sowie ein hoher Aufwand für Sicherheitseinrichtungen gegenüber. Hinzu kommt, dass aktuell in der Industrie eingesetzte Gas- oder Festkörperlaser-Schweißgeräte große Abmessungen aufweisen und für den Einsatz in der Automobilindustrie nicht geeignet sind. Ein Beispiel für ein Laserschweißsystem dessen Laserstrahlen mittels eines Linearantriebs entlang der Schweißnaht bewegbar sind, ist beispielsweise aus der JP 2004-243393 bekannt.

Die JP 58/053384 offenbart ein Laser-Schweißwerkzeug mit einem an einem horizontalen Arm schwenkbar angeordneten Hebel. An der Spitze des horizontalen Armes befindet sich ein wassergekühltes Bauteil, das an der Unterseite von zwei zu verschweißenden Platten zur Anlage bringbar ist. Gegenüber dem Bauteil befindet sich ein an der Spitze des Hebels angeordnetes Bauteil, das an der Oberseite der zwei zu verschweißenden Platten zur Anlage bringbar ist. Mittels eines Hubzylinders lassen sich der Arm und der Hebel gegeneinander bewegen, so dass die zu verschweißenden Platten zwischen den Bauteilen eingeklemmt werden. Nach dem Einklemmen der zu verschweißenden Platten wird in einer außen an dem Hebel angeordneten Laservorrichtung Laserstrahlung erzeugt, die durch den rinnenförmigen Hebel auf einen Reflektor trifft, der die Strahlung in Richtung der zu verschweißenden Platten umlenkt.

Der Reflektor ist in dem oberen Bauteil an der Spitze des Hebels verschieblich angeordnet und mittels eines außerhalb des Hebels angeordneten Zylinders hin- und her verschieblich, um die Schweißnaht auf dem Bauteil zu erzeugen.

Die US 2007/119829 A1 offenbart eine Laser-Schweißvorrichtung für den mobilen Einsatz zur Herstellung ringförmiger Schweißnähte an den Verbindungsstellen von Rohren einer Pipeline. Von einer auf einem separaten Transportfahrzeug angeordneten Laserstrahlungsquelle gelangt über einen Lichtleiter die Laserstrahlung zu einem Laser-Schweißkopf, der ringförmig um die Ringnaht der Rohre herum bewegbar ist. Der Schweißkopf befindet sich im Abstand von der Schweißzone.

Die US 2003/213786 A1 betrifft ein handgeführtes LaserSchweißgerät, bei dem die Laserstrahlung von einer entfernten Laserstrahlungsquelle einer Düse des Handgerätes zugeführt wird, die von Öffnungen für Schweißpulver umgeben ist. Ein Näherungsschalter kann die Schweißoperation von der Gegenwart eines werkstücks abhängig machen.

Die JP 06 015471 A offenbart ein zangenförmiges Laser-Schweißwerkzeug mit einem unteren und einem oberen Klemmstück, zwischen dem die zu verschweißenden Werkstücke zusammengepresst werden können. In dem zylindrischen, konisch in Richtung einer Austrittsöffnung zulaufenden oberen Klemmstück befindet sich ein Laser, so dass kein Laserlicht aus dem oberen Klemmstück austreten kann.

Ausgehend von diesem Stand der Technik liegt der Erfindung die Aufgabe zu Grunde, ein Laser-Schweißwerkzeug für Schweißvorgänge in der Automobilindustrie zu schaffen, das sich in die bestehende Infrastruktur zum widerstandsschweißen integrieren lässt, insbesondere eine Weiterverwendung vorhandener Bauteilwerkzeuge und Handhabungseinrichtungen für die Schweißwerkzeuge ermöglicht, das die erforderliche Personensicherheit bei einer üblichen Laser-Schweißleistung im Automobilbau (bis zu 2 KW) gewährleistet und die konzeptbedingten Nachteile industrieller Laser-Schweißwerkzeuge, insbesondere die hohen Anschaffungskosten, den schlechten Wirkungsgrad sowie den hohen Sicherheitsaufwand reduziert.

Ein Laserschweißwerkzeug gemäß der Erfindung ist im Anspruch 1 definiert.

Der Einsatz von Faserlasern mit kompakten Abmessungen und flexibel gestaltbaren Laserquellen erlaubt die Integration des Laser-Schweißwerkzeugs in die Infrastruktur herkömmlicher Widerstandsschweißeinrichtungen für die Automobilindustrie. Die Laserstrahlung lässt sich mit Hilfe der Faser zur Lichtleitung in die Nähe der herzustellenden Schweißnaht nach Art eines Kabels führen, so dass das Laserschweißen auch unter beengten Verhältnissen, wie diese häufig bei der Fügung von Werkstücken in der Automobilindustrie anzutreffen sind, zum Einsatz gelangen kann. Gleichzeitig zeichnen sich Faserlaser durch eine gegenüber Gas- und Festkörperlasern höhere Strahlqualität, einen höheren Wirkungsgrad von derzeit über 30 %, geringere Unterhaltskosten und zugleich niedrigere Anschaffungskosten aus.

Der dotierte Kern der Faser, insbesondere Glasfaser, bildet bei einem Faserlaser das aktive Medium. Die in die Faser eingekoppelte und durch diese hindurch geleitete Laserstrahlung erfährt aufgrund der großen Länge der Faser eine hohe Verstärkung. Faserlaser werden optisch gepumpt, in dem parallel zum Faserkern oder in die Faser die Laserstrahlung von Laserdioden eingekoppelt wird.

Um eine breitere Schweißnaht mit einer Nahtbreite zu legen, ist es erfindungsgemäß vorgesehen, dass zwischen dem Kollimator und dem entlang der vorgegebenen Bewegungslinie verfahrbaren Tragelement des Linearantriebs ein Wobbelgenerator angeordnet ist. Ein Wobbelgenerator (auch wobbler genannt) ist ein elektronisches Gerät für die Erzeugung von (*Taumel*-) Schwingungen, wobei die erzeugte Frequenz zyklisch zwischen zwei einstellbaren Endwerten variiert. Die Taumelschwingungen können beispielsweise elektromagnetisch, elektromotorisch oder piezzoelektrisch erzeugt werden. Durch gezielte Ansteuerung des Wobbelgenerators ist eine in Amplitude und Frequenz veränderbare Pendelbewegung des Kollimators senkrecht zu der vorgegebenen Bewegungslinie möglich. Das Tragelement für den Wobbelgenerator bildet beispielsweise eine verfahrbare Grundplatte.

Um bei der Erstellung der Schweißnähte, seien es nun durchgängige Nähte oder Punktnähte, die geforderte Personensicherheit zu gewährleisten ist der Kollimator derart beweglich in dem Gehäuse angeordnet und ausgerichtet, dass die Laserstrahlen ausschließlich durch den Austrittsschlitz hindurch aus dem Gehäuse austreten können. Darüber hinaus wird die Laserleistung des Faserlasers erst dann aktiviert, wenn der Austrittsschlitz auf dem Werkstück aufsitzt. Das an dem Gehäuse angeordnete Schaltelement schaltet beim Aufsitzen des Austrittschlitzes auf einem der Werkstücke die Energieversorgung des Faserlasers ein.

Durch die Kombination dieser Maßnahmen kann die Schweißnaht entlang der vorgegebenen Bewegungslinie erzeugt werden, ohne dass von dem Laser-Schweißwerkzeug, selbst dann, wenn es an einem Roboterarm befestigt ist, irgendeine Gefahr für im Arbeitsumfeld des Roboters befindliche Personen ausgeht.

Eine Behinderung des Schweißvorgangs durch Gehäusekanten wird weitgehend vermieden, wenn sich das Gehäuse in Richtung des Austrittsschlitzes trichterförmig verjüngt.

Herkömmliche Widerstandsschweißeinrichtungen in Form von Punktschweißzangen werden in der Automobilindustrie üblicherweise mittels eines Schweißroboters bewegt. Um diese Arbeitsabläufe unverändert beibehalten zu können, ist das Laser-Schweißwerkzeug vorzugsweise als Schweißzange mit einem Zangengestell, einem an dem Zangengestell angeordneten, insbesondere C-förmigen Unterwerkzeug und einer das Gehäuse gegenüber dem Zangengestell bewegenden Verfahreinheit ausgestaltet, wobei sich am freien Ende des Unterwerkzeugs ein mit diesem fluchtendes Druckstück befindet und das Druckstück und die damit fluchtende Austrittsöffnung mittels der Verfahreinheit aufeinander zu und voneinander wegbewegbar sind. Das Druckstück bildet das Gegenlager beim kraftorientierten Zusammenfahren von Gehäuse und Unterwerkzeug.

Eine optimierte Lastabtragung beim Zusammenfahren der Schweißzange wird dadurch erreicht, dass das Druckstück der Form der Austrittsschlitzes entspricht.

Zur Modularisierung und damit Kostenreduktion des erfindungsgemäßen Laser-Schweißwerkzeuges ist es vorgesehen, dass die Verfahreinheit ein an dem Zangengestell gehaltenen Stellantrieb, eine Gehäuseaufnahme sowie eine Linearführung für die Gehäuseaufnahme aufweist. Die Gehäuseaufnahme ist vorzugsweise so beschaffen, dass unterschiedliche Gehäuse in kurzer Zeit an der Gehäuseaufnahme befestigbar sind. Eine Anpassung an unterschiedliche Schweißbedingungen ist daher ohne weiteres möglich.

Das Gehäuse umfasst zumindest den Kollimator, den dem Kollimator zugeordneten Linearantrieb sowie die insbesondere trichterförmige Umhausung des Laserstrahls. Um eine gleichmäßige Bewegung des Kollimators und damit des Laserstrahls bzw. das Anfahren und Beibehalten vorgegebener Positionen für den Kollimator exakt steuern zu können, weist der Linearantrieb für den Kollimator einen einachsigen Linearschlitten auf, der mit einem Stellantrieb verbunden ist. Der Stellantrieb wird insbesondere als Servomotor ausgeführt. In Betracht kommen Elektro- und Hydraulikmotoren.

Die Aktivierung des Faserlasers beim Aufsitzen des Austrittsschlitzes auf einem der Werkstücke wird durch das an dem Gehäuse angeordnete Schaltelement bewirkt, das beim Aufsitzen des Austrittsschlitzes die Energieversorgung des Faserlasers einschaltet. Das Schaltelement kann ein unmittelbar zu dem Austrittsschlitz benachbarter Kontakt, ein Sensorelement oder ein Tastschalter sein. Alternativ kann ein beweglicher, den Austrittsschlitz umfassender Gehäuseteil zugleich als Schaltelement fungieren.

Um die geöffnete Laser-Schweißzange mit einem Roboter rasch an den zu verschweißenden werkstücken in Position bringen zu können, ist in vorteilhafter Ausgestaltung der Erfindung vorgesehen, dass das Zangengestell auf einem Ausgleichsmodul angeordnet ist, das geringfügige Ausgleichsbewegungen des Zangengestells gegenüber einem Roboterarm zur Bewegung des Laser-Schweißwerkzeugs zulässt. Beim Anfahren der Schweißposition befindet sich das Druckstück des Unterwerkzeugs in einem definierten Abstand zu einem der Werkstücke, von beispielsweise 2 bis 3 mm. Die Austrittsöffnung des Laser-Moduls befindet sich bei geöffneter Schweißzange beispielsweise 150 mm von dem zu verschweißenden Werkstück. Erst nach dem Anfahren der Schweißposition werden zunächst das Unterwerkzeug mit Hilfe des Ausgleichsmoduls und dann das Gehäuse (Oberwerkzeug) an den Werkstücken zur Anlage gebracht. Geringfügig unterschiedliche Positionen der zu verschweißenden Werkstücke in Bezug auf eine definierte Schweißposition der Schweißzange stellen daher für das Anfahren der Schweißposition kein Problem dar.

Damit sich das Unterwerkzeug des Laser-Schweißwerkzeuges stets an dem Werkstück schwimmend ausrichtet, ohne die Position des Werkstücks zu verändern, ist in einer Ausgestaltung der Erfindung vorgesehen, dass das Ausgleichsmodul ein Ausgleichsgrundgestell zur Befestigung an einem Roboterarm aufweist, an dem Ausgleichsrundgestell eine Linearführung für das Zangengestell mit übereinstimmender Bewegungsrichtung wie die Linearführung für die Gehäuseaufnahme angeordnet ist und das Ausgleichsmodul einen auf das Zangengestell wirkenden Kurzhub-Linearantrieb aufweist, in dessen geradlinig wirkendem Kraftfluss eine Federdruckeinheit geschaltet ist.

Nachfolgend wird die Erfindung anhand der Figuren näher erläutert. Es zeigen:
- **Figur 1a**: eine perspektivische Ansicht einer erfindungsgemä- ßen Laser-Schweißzange in geöffnetem Zustand
- **Figur 1b**: eine Laser-Schweißzange nach Figur 1a in geschlos- senem Zustand
- **Figur 2a**: eine Seitenansicht und eine Aufsicht auf eine ge- öffnete Laser-Schweißzange nach Figur 1
- **Figur 2b**: eine Seitenansicht und eine Aufsicht auf eine ge- schlossene Laser-Schweißzange nach Figur 1 sowie
- **Figur 3**: eine schematische Darstellung des Funktionsprinzips der Laser-Schweißzange nach Figuren 1 und 2

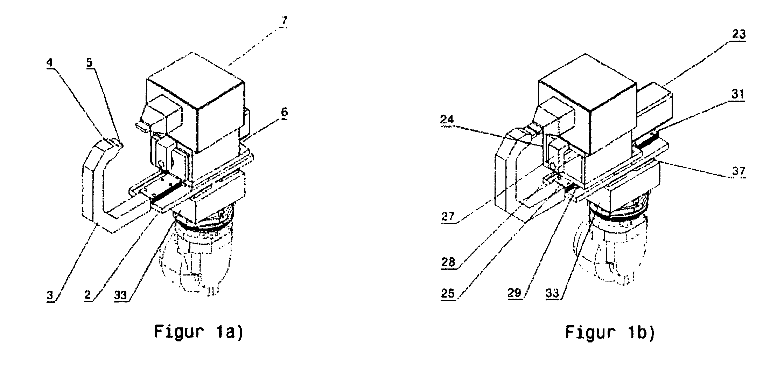

Figur 1 zeigt eine Laser-Schweißzange (1) mit einem als Platte ausgeführten Zangengestell (2), einem an dem Zangengestell (2) angeordneten, im Wesentlichen C-förmigen Unterwerkzeug (3), wobei sich am freien Ende (4) des Unterwerkzeugs (3) ein Druckstück (5) befindet. Auf dem Zangengestell (2) ist eine insgesamt mit (6) bezeichnete Verfahreinheit angeordnet, die das insgesamt mit (7) bezeichnete Lasermodul (7) in Richtung des Druckstücks (5) bzw. von diesem weg bewegt.

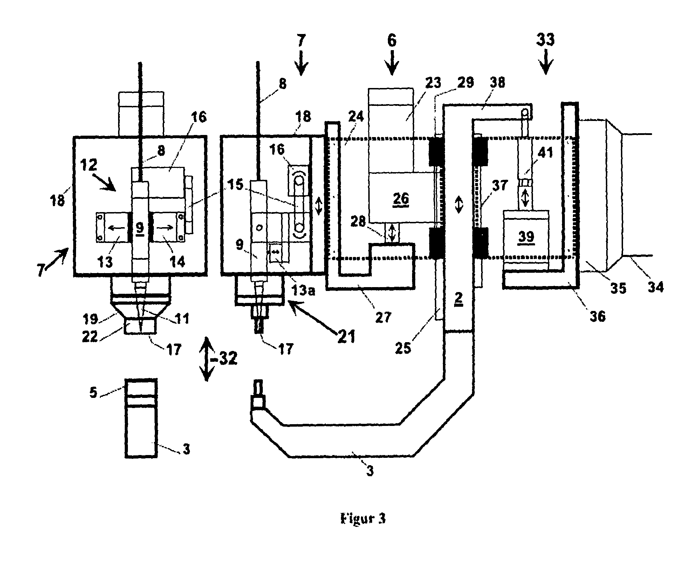

Unter Bezugnahme auf die schematische Darstellung in Figur 3 werden zunächst der Aufbau und die Funktionsweise des Lasermoduls (7) näher erläutert. Der Laser ist, gemäß der Erfindung, als Faserlaser ausgestaltet. Die Laserstrahlung einer Laserdiode wird über eine in der Figur 3 nicht dargestellte Optik zum Einkoppeln der Laserstrahlung in eine Faser (8) eingekoppelt, die als flexibler Leiter in das gekapselte Lasermodul (7) geleitet wird. Dort ist die Faser (8) mit einem Kollimator (9) zur Fokussierung der Laserstrahlung (11) verbunden. Der insgesamt mit (12) bezeichnete Linearantrieb für den Kollimator (9) weist einen in Richtung der einzigen Achse (13) beweglichen Linearschlitten (14) auf, der im dargestellten Ausführungsbeispiel über ein Zugmittelgetriebe (15) mit einem als Servomotor ausgestalteten Stellantrieb (16) verbunden ist.

Der Linearantrieb (12) mit dem Kollimator (9) einschließlich eines Teilstücks der Faser (8) sind in einem einen Austrittsschlitz (17) für die Laserstrahlung (11) aufweisenden Gehäuse (18) angeordnet, das sich in Richtung des Austrittsschlitzes (17) in einem Abschnitt (19) eines Gehäusefortsatzes (21) trichterförmig verjüngt.

Wie aus der Aufsicht in Figur 3 erkennbar, wird die Laserstrahlung (11) vollständig von dem Gehäuse (18), insbesondere dem Gehäusefortsatz (21) mit dem trichterförmigen Abschnitt (19) umhaust. Dadurch ist gewährleistet, dass die Laserstrahlung (11) ausschließlich aus dem Austrittsschlitz (17) austreten kann.

Die Laserenergie zur Aktivierung des Faserlasers wird durch ein stirnseitig des sich verjüngenden Abschnitts (19) angeordnetes Druckstück (22) aktiviert, das beim Aufsetzen auf einem der Werkstücke und optional dem Aufbau einer definierten Kraft die Freigabe bewirkt. Sobald, gemäß der Erfindung, der metallische Austrittschlitz (17), der zugleich als Kontakt dient, auf dem Werkstück aufsitzt, wird ein Stromkreis geschlossen, in dem beispielsweise über einen Optokoppler die Laserenergie aktiviert wird. Zusätzlich kann die Aktivierung von dem Aufbau einer hinreichenden Druckkraft zwischen den Druckstücken (5,22) der Schweißzange abhängig gemacht werden. Die Kraftmessung erfolgt mittels Kraftsensoren im Kraftfluss der Zange, beispielsweise an oder in Verlängerung des Unterwerkzeugs (3).

Das vorstehend beschriebene Lasermodul (7) ist derart auf der verfahreinheit (6) angeordnet, dass das Druckstück (22) des Lasermoduls (7) mit dem Druckstück (5) des Unterwerkzeugs (3) fluchtet.

Der Aufbau und die Funktionsweise der Verfahreinheit (6) werden ebenfalls anhand von Figur 3 näher erläutert. Die Verfahreinheit (6) weist einen an dem Zangengestell (2) gehaltenen Stellantrieb (23) in Form eines Servomotors, eine Gehäuseaufnahme (24) sowie eine als Führungsschiene ausgebildete Linearführung (25) für die Gehäuseaufnahme (24) auf. Der Stellantrieb (23) ist mittels einer Halterung (26) an dem Zangengestell (2) befestigt.

Die Gehäuseaufnahme (24) ist, wie insbesondere aus Figuren 1a und 1b ersichtlich, als Rechteckprofil ausgestaltet, an dessen dem Unterwerkzeug zugewandter Stirnseite ein Haltewinkel (27) befestigt ist, an dem eine Antriebsstange (28) des Servomotors (23) angreift. An der Unterseite der Gehäuseaufnahme (24) sind Führungselemente (29) angeordnet, die in entsprechenden Nuten (31) der Führungsschiene (25) greifen. Mittels des Stellantriebs (23) der verfahreinheit (6) ist das Lasermodul (7) über eine frei programmierbare Strecke (32) bis an das Werkstück verfahrbar.

Schließlich ist an der Unterseite des plattenförmigen Zangengestells (2) ein Ausgleichsmodul (33) relativ beweglich zu dem Zangengestell (2) angeordnet, das geringfügige Ausgleichsbewegungen des Zangengestells (2) gegenüber einem Roboterarm (34) zulässt. Der Roboterarm (34) ist mit dem Ausgleichsmodul (33) der Schweißzange (1) über einen Wechselflansch (35) verbunden.

Der Aufbau des Ausgleichsmoduls (33) wird nun unter Bezugnahme auf die schematische Darstellung in Figur 3 näher erläutert. An dem Wechselflansch (35) ist ein Ausgleichsgrundgestell (36) mit einer Linearführung (37) für das Zangengestell (2) befestigt. Die Linearführung (37) weist eine übereinstimmende Bewegungsrichtung wie die Linearführung (25) für die Gehäuseaufnahme (24) auf.

An dem dem Unterwerkzeug (3) gegenüberliegenden Ende des Zangengestells (2) ist ein Befestigungsflansch (38) angeordnet. Zwischen dem Befestigungsflansch (38) und dem Ausgleichsgrundgestell (36) ist ein auf das Zangengestell (2) wirkender Kurzhub-Zylinder (39) sowie eine Federdruckeinheit (41) zwischengeschaltet. Die Federdruckeinheit (41) ist in die Kolbenstange des Kurzhub-Zylinders (39) derart integriert, dass der gradlinig wirkende Kraftfluss nicht beeinträchtig wird. Zu diesem Zweck kann eine von einer Hülse umgebene Druckfeder als Federdruckeinheit in die Kolbenstange integriert sein.

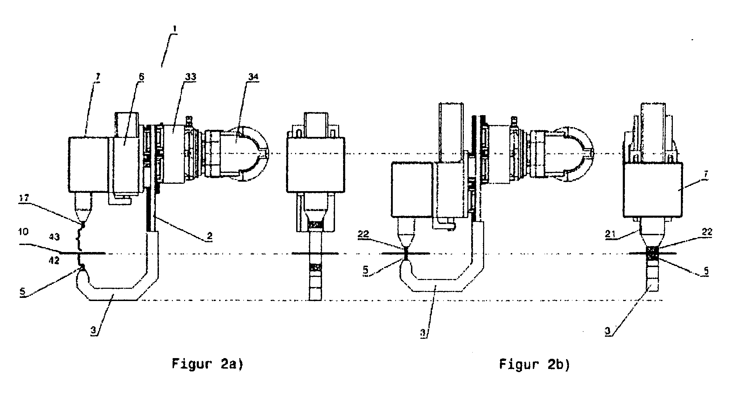

Die Arbeitsweise der erfindungsgemäßen Laser-Schweißzange (1) sowie des Ausgleichsmoduls (33) werden nachfolgend näher anhand der Figuren 2a, 2b erläutert. Figur 2a zeigt, wie die geöffnete Laser-Schweißzange (1), gehalten von dem Roboterarm (34) eines Roboters an miteinander zu verbindenden werkstücken(10) in Position gebracht wird. Das Unterwerkzeug (3), das am Zangengestell (2) befestigt ist, hat bei nicht aktiviertem Ausgleichsmodul (33) einen definierten Abstand (42) zum Werkstück von beispielsweise 2 bis 3 mm. Dieser Abstand (42) ist so gewählt, dass ein schnelles Anfahren der Schweißposition durch den Roboter unter Einbeziehung von etwaigen Werkstückpositionsschwankungen jederzeit möglich ist. Der Abstand (43) des Lasermoduls (7) zum Werkstück ist innerhalb des Gesamthubs der Verfahreinheit (6) frei programmierbar und beträgt beispielsweise 150 mm.

Mit dem Positionieren der Laser-Schweißzange (1) an den Werkstücken (10) wird die Schließfunktion der Laser-Schweißzange (1) gestartet. Dabei wird zunächst das Ausgleichsmodul (33) aktiviert, indem der Kurzhub-Zylinder (39) aktiviert wird und das Unterwerkzeug (3) mit dem Druckstück (5) mit einer definierten Kraft gegen eines der zu verschweißenden Werkstücke (10) presst. Diese Kraft ist so bemessen, dass sich das Unterwerkzeug (3) am Werkstück schwimmend ausrichtet, ohne jedoch die Position des Werkstücks zu verändern. Die schwimmende Ausrichtung bei definierter Kraft wird auch bei Werkstückspositionsschwankungen durch die Federdruckeinheit (41) gewährleistet. Zeitgleich zur Aktivierung des Ausgleichsmoduls (33) wird die Verfahreinheit (6) gestartet. Bedingt durch den größeren Abstand (43) zum Werkstück (10) trifft das Lasermodul mit dem Austrittsschlitz (17) bei gleicher Bewegungsgeschwindigkeit etwas später auf dem anderen Werkstück (10) auf. Während des Zusammenfahrens setzen das Druckstück (5) des Unterwerkzeugs (3) sowie das Druckstück (22) des Lasermoduls (7) auf den werkstücken (10) fluchtend zueinander auf und fügen die zu verschweißenden werkstücke (10) passgenau zusammen. Erst nach dem Aufsetzen des Druckstücks (22) des Lasermoduls (7) kann der Schweißprozess begonnen werden.

Durch Bewegung des Kollimators (9) längs des Linearschlittens (14) bewegt sich der in Richtung des Austrittsschlitzes (17) fokussierte Laserstrahl (11) parallel zu der Bewegungslinie (13) des Kollimators. Entlang des von dem Austrittsschlitz (17) umgebenen Oberflächenbereichs des Werkstücks (10) kann auf der Länge des Austrittsschlitzes eine Punktschweißnaht oder eine durchgehende Schweißnaht gelegt werden.

Um eine breitere Schweißnaht zu legen, ist, gemäß der Erfindung, zwischen dem Kollimator (9) und dem entlang der vorgegebenen Bewegungslinie (13) verfahrbaren Tragelement des Linearschlittens (14) ein Wobbelgenerator (13a) angeordnet. Der Wobbelgenerator (13a) erzeugt Taumelschwingungen des um eine Drehachse drehbar gelagerten Kollimators (9). Die Drehachse verläuft parallel zum Verschiebeweg (13) des Kollimators (9). Die Taumelschwingungen bewirken, dass der Laserstrahl (11) am Austrittschlitz (17) mit einer maximal deren Breite entsprechenden Amplitude schwingt und dadurch eine auf bis zu 2 mm verbreiterte Schweißnaht erzeugt.

### Bezugszeichenliste

| **Nr.** | **Bezeichnung** | **Nr.** | **Bezeichnung** |
|---|---|---|---|
| 1. | Laserschweißzange | 23. | Stellantrieb |
| 2. | Zangengestell | 24. | Gehäuseaufnahme |
| 3. | Unterwerkzeug | 25. | Linearführung |
| 4. | freies Ende | 26. | Halterung |
| 5. | Druckstück | 27. | Haltewinkel |
| 6. | Verfahreinheit | 28. | Antriebsstange |
| 7. | Lasermodul | 29. | Führungselement |
| 8. | Faser | 30. | --- |
| 9. | Kollimator | 31. | Nuten |
| 10. | Werkstück(e) | 32. | Strecke |
| 11. | Laserstrahlung | 33. | Ausgleichsmodul |
| 12. | Linearantrieb | 34. | Roboterarm |
| 13. | Achse | 35. | Wechselflansch |
| 14. | Linearschlitten | 36. | Ausgleichsgrundgestell |
| 15. | Zugmittelgetriebe | 37. | Linearführung |
| 16. | Stellantrieb | 38. | Befestigungsflansch |
| 17. | Austrittsschlitz | 39. | Kurzhubzylinder |
| 18. | Gehäuse | 40. | --- |
| 19. | Abschnitt | 41. | Federdruckeinheit |
| 20. | --- | 42. | Abstand |
| 21. | Gehäusefortsatz | 43. | Abstand |
| 22. | Druckstück | | |

## Patentansprüche

1. Laser-Schweißwerkzeug (1) zur Erzeugung einer Schweißnaht zum Verbinden von Werkstücken (10), dessen Laserstrahl mittels eines Linearantriebs (12) entlang der Schweißnaht bewegbar ist, ein Kollimator (9) an dem Linearantrieb (12) angeordnet ist, der eine Bewegung des Kollimators (9) entlang einer vorgegeben Bewegungslinie (13) ermöglicht, der Linearantrieb (12) mit dem Kollimator (9) in einem einen Austrittsschlitz (17) für die Laserstrahlen (11) aufweisenden Gehäuse (18) angeordnet ist, wobei die Bewegungslinie (13) des Kollimators (9) parallel zu dem Austrittschlitz (17) verläuft und der Kollimator (9) so ausgerichtet ist, dass die Laserstrahlen (11) ausschließlich durch den Austrittsschlitz (17) hindurch aus dem Gehäuse (18) austreten, **dadurch gekennzeichnet, dass**
- der Laser ein Faserlaser ist, der eine Faser (8) zur Lichtleitung, eine Optik zum Einkoppeln der Laserstrahlung einer Strahlungsquelle in die Faser (8) und den mit der Faser verbunden Kollimator (9) zur Fokussierung des Verlaufs der Laserstrahlen (11) umfasst
- dass an dem Gehäuse (18) ein Schaltelement, wie beispielsweise ein unmittelbar zum Austrittschlitz benachbarter Kontakt, ein Sensorelement, ein Tastschalter oder ein metallischer Austrittschlitz (17) ist, der zugleich als Kontakt dient, angeordnet ist, das beim Aufsitzen des Austrittschlitzes (17) auf einem der Werkstücke (10) die Energieversorgung des Faserlasers einschaltet und
- zwischen dem Kollimator (9) und einem entlang der vorgegebenen Bewegungslinie (13) verfahrbaren Tragelement des Linearantriebs (12) ein Wobbelgenerator (13a) angeordnet ist.

2. Laser-Schweißwerkzeug nach Anspruch 1, **dadurch gekennzeichnet, dass** sich das Gehäuse (18) in Richtung des Austrittsschlitzes (17) trichterförmig verjüngt.

3. Laser-Schweißwerkzeug nach Anspruch 1 oder 2, **dadurch gekennzeichnet, dass** das Laser-Schweißwerkzeug als Schweißzange (1) mit einem Zangengestell (2), einem an dem Zangengestell (2) angeordneten Unterwerkzeug (3) und einer das Gehäuse (18) gegenüber dem Zangengestell (2) bewegenden verfahreinheit (6) ausgestaltet ist, wobei sich am freie Ende des Unterwerkzeugs (3) ein Druckstück (5) befindet und das Druckstück (5) und die damit fluchtende Austrittsöffnung (17) mittels der verfahreinheit (6) aufeinander zu und voneinander weg bewegbar sind.

4. Laser-Schweißwerkzeug nach Anspruch 3, **dadurch gekennzeichnet, dass** das Druckstück (5) der Form des Austrittschlitzes (17) entspricht.

5. Laser-Schweißwerkzeug nach Anspruch 3 oder 4, **dadurch gekennzeichnet, dass** die verfahreinheit (6) einen an dem Zangengestell (2) gehaltenen Stellantrieb(23), eine Gehäuseaufnahme (24) sowie eine Linearführung (25) für die Gehäuseaufnahme (24) aufweist.

6. Laser-Schweißwerkzeug nach einem der Ansprüche 1 bis 5, **dadurch gekennzeichnet, dass** der Linearantrieb (12) für den Kollimator (9) einen einachsigen Linearschlitten (14) aufweist, der mit einem Stellantrieb (16) verbunden ist.

7. Laser-Schweißwerkzeug nach einem der Ansprüche 1 bis 6, **dadurch gekennzeichnet, dass** das Zangengestell (2) auf einem Ausgleichsmodul (33) angeordnet ist, das geringfügige Ausgleichsbewegungen des Zangengestells (2) gegenüber einem Roboterarm (34) zur Bewegung des Laser-Schweißwerkzeugs zulässt.

8. Laser-Schweißwerkzeug nach Anspruch 7, **dadurch gekennzeichnet, dass** das Ausgleichsmodul (33) ein Ausgleichsgrundgestell (36) zur Befestigung an dem Roboterarm (34) aufweist, an dem Ausgleichsgrundgestell (36) eine Linearführung (37) für das Zangengestell (2) mit übereinstimmender Bewegungsrichtung wie die Linearführung (25) für die Gehäuseaufnahme (24) angeordnet ist und das Ausgleichsmodul (33) einen auf das Zangengestell (2) wirkenden Kurzhub-Linearantrieb (39) aufweist, in dessen geradlinig wirkenden Kraftfluss eine Federdruckeinheit (41) geschaltet ist.

## Claims

1. A laser welding tool (1) for producing a weld seam for joining workpieces (10), whose laser beam can be moved along the weld seam by means of a linear drive (12),
- a collimator (9) is disposed on the linear drive (12), which enables a movement of the collimator (9) along a pre-determined movement line (13),
- the linear drive (12) with the collimator (9) is disposed in a housing (18) having an outlet slit (17) for the laser beams (11), wherein the movement line (13) of the collimator (9) runs parallel to the outlet slit (17) and the collimator (9) is aligned so that the laser beams (11) emerge exclusively through the outlet slit (17) from the housing (18), **characterised in that**
- the laser is a fibre laser that comprises a fibre (8) for light guiding, optics for coupling the laser radiation of a radiation source into the fibre (8) and the collimator (9) connected to the fibre for focusing the course of the laser beams (11),
- that a switching element such as, for example, a contact directly adjacent to the outlet slit, a sensor element, a pushbutton switch or a metal outlet slit (17) which at the same time serves as a contact is disposed on the housing (18), which contact switches on the energy supply of the fibre laser when the outlet slit (17) rests on one of the workpieces (10), and
- a sweep generator (13a) is disposed between the collimator (9) and a carrier element of the linear drive (12) which can be displaced along the pre-determined movement line (13).

2. The laser welding tool according to claim 1, **characterised in that** the housing (18) tapers in a funnel shape in the direction of the outlet slit (17).

3. The laser welding tool according to claim 1 or 2, **characterised in that** the laser welding tool is configured as welding tongs (1) having a tong frame (2), a lower tool (3) disposed on the tong frame (2) and a displacement unit (6) which moves the housing (18) with respect to the tong frame (2), wherein a pressure piece (5) is located at the free end of the lower tool (3) and the pressure piece (5) and the outlet opening (17) aligned therewith can be moved towards one another and away from one another by means of the displacement unit (6).

4. The laser welding tool according to claim 3, **characterised in that** the pressure piece (5) corresponds to the shape of the outlet slit (17).

5. The laser welding tool according to claim 3 or 4, **characterised in that** the displacement unit (5) comprises an actuating drive (23) held on the tong frame (2), a housing receptacle (24) and a linear guide (25) for the housing receptacle (24).

6. The laser welding tool according to any one of claims 1 to 5, **characterised in that** the linear drive (12) for the collimator (9) comprises a uni-axial linear carriage (14) that is connected to an actuating drive (16).

7. The laser welding tool according to any one of claims 1 to 6, **characterised in that** the tong frame (2) is disposed on a balancing module (33) that allows slight balancing movements of the tong frame (2) with respect to a robot arm (34) for movement of the laser welding tool.

8. The laser welding tool according to claim 7, **characterised in that** the balancing module (33) comprises a balancing base frame (36) for mounting on the robot arm (34), a linear guide (37) for the tong frame (2) having the same direction of movement as the linear guide (25) for the housing receptacle (24) is disposed on the balancing base frame (36) and the balancing module (33) comprises a short stroke linear drive (39) acting on the tong frame (2), a spring pressure unit (41) being switched in the rectilinearly acting force flux thereof.

## Revendications

1. Outil de soudage au laser (1) destiné à générer une soudure pour la liaison de pièces (10), dont le faisceau laser peut être déplacé au moyen d'un entraînement linéaire (12) le long de la soudure,
- un collimateur (9) étant disposé sur l'entraînement linéaire (12), qui permet un déplacement du collimateur (9) le long d'une ligne de déplacement (13) prédéfinie,
- l'entraînement linéaire (12) avec le collimateur (9) étant disposé dans un boîtier (18) présentant une fente de sortie (17) pour les faisceaux laser (11), la ligne de déplacement (13) du collimateur (9) étant agencée parallèlement à la fente de sortie (17) et le collimateur (9) étant orienté de telle sorte que les faisceaux laser (11) sortent exclusivement à travers la fente de sortie (17) du boîtier (18), **caractérisé en ce que**
- le laser est un laser à fibre, qui comprend une fibre (8) pour la conduction de lumière, une optique pour l'injection du rayonnement laser d'une source de rayonnement dans la fibre (8) et le collimateur (9) relié à la fibre pour la focalisation du tracé des faisceaux laser (11),
- **en ce qu'**un élément de commutation, comme par exemple un contact voisin directement de la fente de sortie, un élément capteur, un bouton-poussoir ou une fente de sortie (17) métallique, qui sert en même temps de contact, est disposé sur le boîtier (18), lequel élément enclenche l'alimentation en énergie du faisceau à fibre lors du placement de la fente de sortie (17) sur l'une des pièces (10) et
- un générateur vobulateur (13a) est disposé entre le collimateur (9) et un élément porteur, déplaçable le long de la ligne de déplacement (13) prédéfinie, de l'entraînement linéaire (12).

2. Outil de soudage à laser selon la revendication 1, **caractérisé en ce que** le boîtier (18) se rétrécit en forme d'entonnoir en direction de la fente de sortie (17).

3. Outil de soudage à laser selon la revendication 1 ou 2, **caractérisé en ce que** l'outil de soudage à laser est conçu comme pince de soudage (1) avec un bâti de pince (2), un sous-outil (3) disposé sur le bâti de pince (2) et une unité de déplacement (6) déplaçant le boîtier (18) par rapport au boîtier de pince (2), une pièce de pression (5) se trouvant sur l'extrémité libre du sous-outil (3) et la pièce de pression (5) et l'ouverture de sortie (17) en alignement avec la pièce pouvant être déplacées au moyen de l'unité de déplacement (6) l'une vers l'autre et en s'éloignant l'une de l'autre.

4. Outil de soudage à laser selon la revendication 3, **caractérisé en ce que** la pièce de pression (5) correspond à la forme de la fente de sortie (17).

5. Outil de soudage à laser selon la revendication 3 ou 4, **caractérisé en ce que** l'unité de déplacement (6) présente un entraînement de réglage (23) maintenu sur le bâti de pince (2), un logement de boîtier (24) et un guide linéaire (25) pour le logement de boîtier (24).

6. Outil de soudage à laser selon l'une des revendications 1 à 5, **caractérisé en ce que** l'entraînement linéaire (12) pour le collimateur (9) présente un coulisseau linéaire (14) à un axe, qui est relié à un entraînement de réglage (16).

7. Outil de soudage à laser selon l'une des revendications 1 à 6, **caractérisé en ce que** le bâti de pince (2) est disposé sur un module de compensation (33), qui autorise de légers mouvements de compensation du bâti de pince (2) par rapport à un bras de robot (34) pour le déplacement de l'outil de soudage à laser.

8. Outil de soudage à laser selon la revendication 7, **caractérisé en ce que** le module de compensation (33) présente un bâti de base de compensation (36) pour la fixation sur le bras de robot (34), un guide linéaire (37) pour le bâti de pince (2) avec un sens de déplacement correspondant au guide linéaire (25) pour le logement de boîtier (24) est disposé sur le bâti de base de compensation (36) et le module de compensation (33) présente un entraînement linéaire à course courte (39) agissant sur le bâti de pince (2), entraînement dans le flux de force agissant de façon rectiligne duquel une unité de pression à ressort (41) est commutée.
